# EUROPEAN PATENT APPLICATION

(11) **EP 4 467 577 A1**
(43) Date of publication of application: **27.11.2024**
(21) Application number: 22922142.9
(22) Date of filing: 16.12.2022
(51) Int. Cl.: C08F 8/42, C08F 8/30, C08F 220/34, C08F 222/22, C08F 230/08, C09D 133/14

(54) **HYDROPHILIC COPOLYMER AND HYDROPHILIC COMPOSITION**

(30) Priority: 19.01.2022 JP 2022006275
(71) Applicant: SHIN-ETSU CHEMICAL CO., LTD., Tokyo 1000005 (JP)
(72) Inventor: TAKAGI Kazunori, Annaka-shi, Gunma 379-0224 (JP); HIROKAMI Munenao, Annaka-shi, Gunma 379-0224 (JP)
(74) Representative: Mewburn Ellis LLP
(86) International application number: PCT/JP2022/046327
(87) International publication number: WO 2023/139991

(57) **Abstract**

A hydrophilic copolymer comprising a constituent unit (a) represented by formula (1) and a constituent unit (b) represented by formula (2) is used to impart a coating film excelling in hydrophilicity, antifogging, and water resistance. 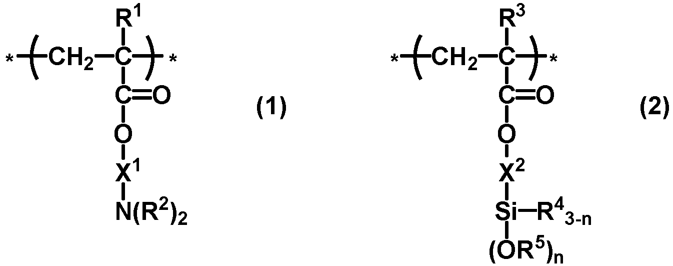 (In formula (1), R¹ represents a hydrogen atom or methyl group, each R² independently represents a hydrogen atom or C1-6 alkyl group, and X¹ represents a divalent linking group. In formula (2), R³ represents a hydrogen atom or methyl group, R⁴ and R⁵ each independently represent a C1-10 alkyl group or C6-10 aryl group, X² represents a bivalent linking group, n represents an integer from 1 to 3, and the asterisk (*) represents a bond to an adjacent constituent unit.)

## Description

### TECHNICAL FIELD

The present invention relates to a hydrophilic copolymer and a hydrophilic composition including the hydrophilic copolymer.

### BACKGROUND ART

There has been a growing demand for reductions in the fogging of base materials composed of an organic material, such as a plastic, or an inorganic material, such as glass.

The fogging of a base material has been commonly reduced by forming a hydrophilic film on the surfaces of the base material. For example, Patent Document 1 proposes, as a coating agent capable of imparting hydrophilicity to a base material, a coating composition including a hydrophilic copolymer having a quaternary ammonium salt structure, which has high hydrophilicity.

However, since a coating film composed of the above coating composition does not have sufficiently high water resistance, the hydrophilic composition included in the coating film may partially elute after the coating film has been got wet with water and, consequently, the surface properties of the coating film, such as hydrophilicity and antifogging property, may deteriorate. Furthermore, after such portions have been dried, traces of drips may remain on the coating film.

### PRIOR ART DOCUMENTS

### PATENT DOCUMENTS

Patent Document 1: JP-A 2018-162431

### SUMMARY OF INVENTION

### TECHNICAL PROBLEM

The present invention was made in light of the above circumstances. An object of the present invention is to provide a hydrophilic copolymer which gives a coating film excellent in terms of hydrophilicity, antifogging property and water resistance and a hydrophilic composition including the hydrophilic copolymer.

### SOLUTION TO PROBLEM

The inventors have conducted intensive investigations in order to achieve the above object and consequently have discovered that a specific hydrophilic copolymer gives a coating film that has excellent water resistance and that can impart long-lasting hydrophilicity and antifogging property to a base material composed of an organic material, such as a plastic, or an inorganic material, such as glass. This discovery ultimately led to the present invention.

Specifically, the present invention provides:
1. A hydrophilic copolymer including a constitutional unit (a) represented by formula (1) below and a constitutional unit (b) represented by formula (2) below, 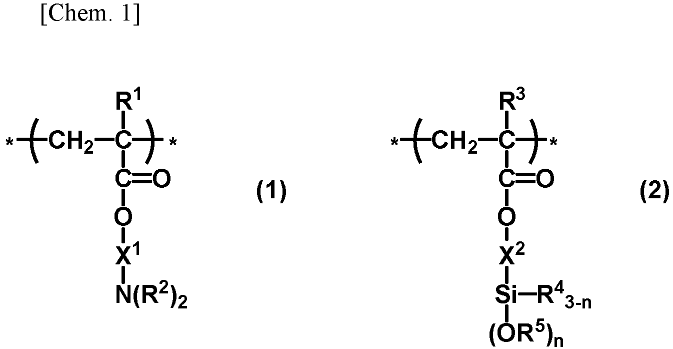 wherein, in formula (1), R¹ represents a hydrogen atom or a methyl group, each R² independently represents a hydrogen atom or an alkyl group of 1 to 6 carbon atoms, and X¹ represents a divalent linking group;
   in formula (2), R³ represents a hydrogen atom or a methyl group, R⁴ and R⁵ each independently represent an alkyl group of 1 to 10 carbon atoms or an aryl group of 6 to 10 carbon atoms, X² represents a divalent linking group, and n represents an integer of 1 to 3; and an asterisk * denotes a bond to a neighboring constitutional unit.
2. The hydrophilic copolymer according to 1, wherein X¹ and X² each independently represent a divalent linking group having one or more selected from the group consisting of a urethane bond, a urea bond, a thiourethane bond and a thiourea bond.
3. A hydrophilic composition including the hydrophilic copolymer according to 1 or 2.
4. A film of the hydrophilic composition according to 3 in a cured state.

### ADVANTAGEOUS EFFECTS OF INVENTION

The hydrophilic copolymer according to the present invention can give a hydrophilic composition capable of forming a coating film that has excellent water resistance and that can impart long-lasting hydrophilicity and antifogging property to a base material composed of an organic material, such as a plastic, or an inorganic material, such as glass.

### DESCRIPTION OF EMBODIMENTS

The present invention is described specifically below.

### [1] Hydrophilic Copolymer

A hydrophilic copolymer according to the present invention (hereinafter, also referred to simply as "copolymer") includes the constitutional units (a) and (b) described below.

Each of the constitutional units of the hydrophilic copolymer according to the present invention is described below.

The constitutional unit (a) included in the hydrophilic copolymer according to the present invention is represented by formula (1) below. 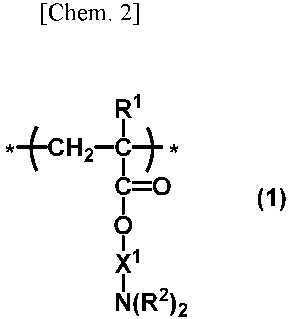 (wherein an asterisk * has the same meaning as above.)

In formula (1), R¹ represents a hydrogen atom or a methyl group and is preferably a hydrogen atom.

Each R² independently represents a hydrogen atom or an alkyl group of 1 to 6 carbon atoms.

The alkyl group of 1 to 6 carbon atoms which is represented by R² may be linear, branched or cyclic. Specific examples thereof include methyl, ethyl, n- propyl, isopropyl, n-butyl, isobutyl, sec-butyl, tert-butyl, n-pentyl, n-hexyl and cyclohexyl groups.

Of these, as R², an alkyl group of 1 to 3 carbon atoms is preferable, a methyl group and an ethyl group are more preferable, and a methyl group is even more preferable in order to enhance the hydrophilicity of the coating film.

X¹ represents a divalent linking group. The divalent linking group is preferably, but not limited to, a divalent linking group having one or more selected from the group consisting of a urethane bond, a urea bond, a thiourethane bond and a thiourea bond and is more preferably a linking group represented by -(CH₂)ₖ₁-Z-(CH₂)ₖ₂- (where Z represents a urethane bond, a urea bond, a thiourethane bond or a thiourea bond, and k1 and k2 each independently represent an integer of 1 to 5 and are preferably each independently an integer of 2 to 4).

Specific examples of the divalent linking group represented by X¹ include, but are not limited to, the linking groups represented by the following formulae.

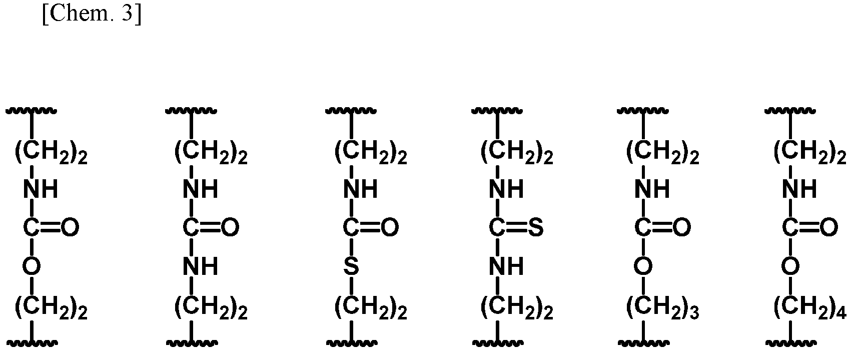

Specific examples of the constitutional unit (a) represented by formula (1) above include, but are not limited to, the constitutional units represented by the following formulae. 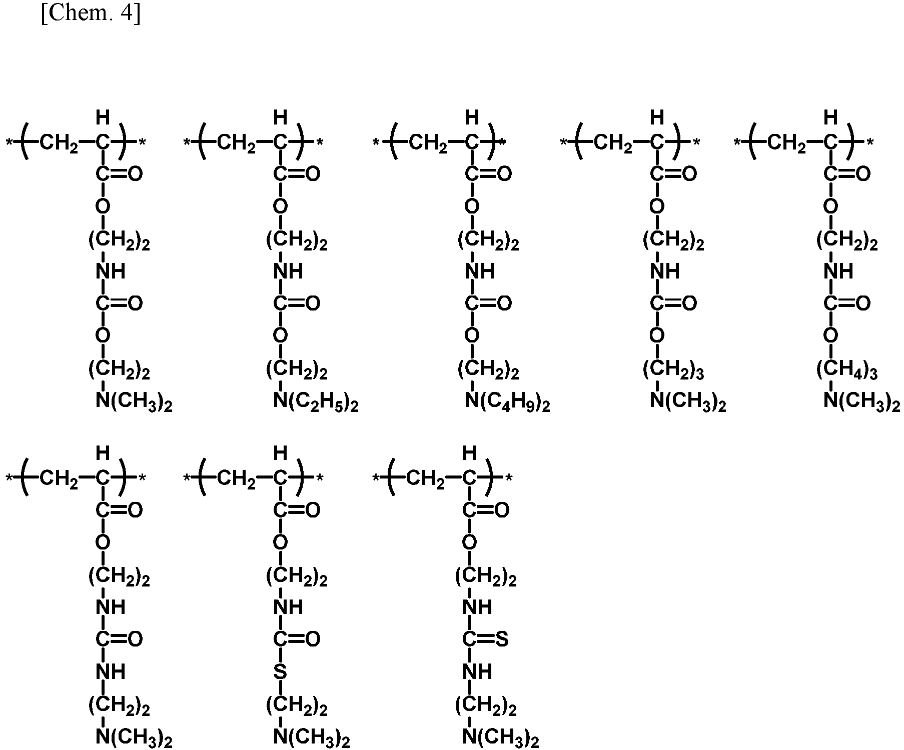 (wherein an asterisk * has the same meaning as above.)

The constitutional unit (b) included in the hydrophilic copolymer according to the present invention is represented by formula (2) below.

The hydrolyzable silyl group included in the constitutional unit (b) is capable of undergoing a crosslinking reaction on its own (self-crosslinking). This enables a crosslinked structure including the hydrophilic copolymer to be formed in the coating film. 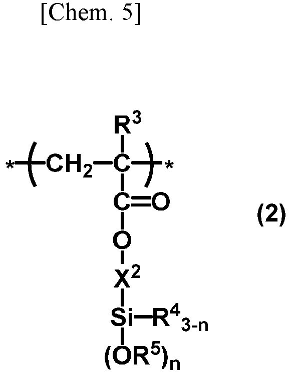 (wherein an asterisk * has the same meaning as above.)

In formula (2), R³ represents a hydrogen atom or a methyl group and is preferably a methyl group.

R⁴ and R⁵ each independently represent an alkyl group that has 1 to 10 carbon atoms, preferably has 1 to 8 carbon atoms, and more preferably has 1 to 6 carbon atoms or an aryl group that has 6 to 10 carbon atoms and preferably has 6 to 8 carbon atoms.

The alkyl groups represented by R⁴ and R⁵ may be linear, branched or cyclic. Specific examples thereof include methyl, ethyl, n-propyl, isopropyl, n-butyl, isobutyl, s-butyl, t-butyl, n-pentyl, n-hexyl and cyclohexyl groups.

Specific examples of the aryl groups represented by R⁴ and R⁵ include phenyl and tolyl groups.

Of these, as R⁴, an alkyl group of 1 to 3 carbon atoms is preferable, and a methyl group is more preferable. As R⁵, an alkyl group of 1 to 3 carbon atoms is preferable, and a methyl group and an ethyl group are more preferable.

X² represents a divalent linking group. The divalent linking group is preferably, but not limited to, a divalent linking group having one or more selected from the group consisting of a urethane bond, a urea bond, a thiourethane bond and a thiourea bond and is more preferably a linking group represented by -(CH₂)ₖ₁-Z-(CH₂)ₖ₂- (where Z represents a urethane bond, a urea bond, a thiourethane bond or a thiourea bond, and k1 and k2 each independently represent an integer of 1 to 5 and are preferably each independently an integer of 2 to 4).

Specific examples of the divalent linking group represented by X² include, but are not limited to, the linking groups represented by the following formulae. Of these, the linking group represented by (3) which includes a urea bond is preferable.

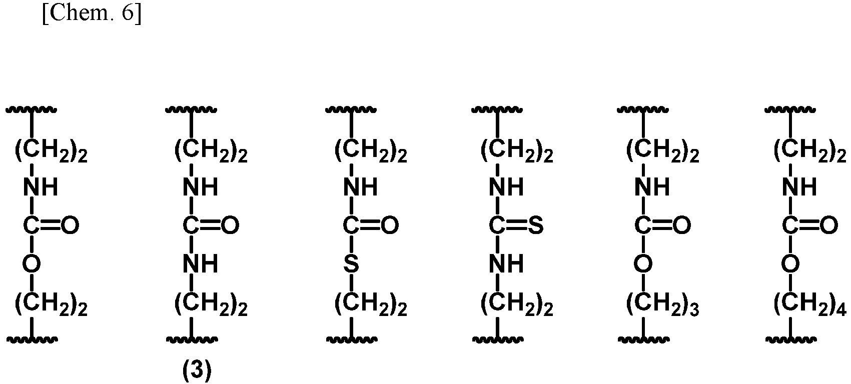

n represents an integer of 1 to 3 and is preferably 3.

Specific examples of the constitutional unit (b) represented by formula (2) above include, but are not limited to, the constitutional units represented by the following formulae.

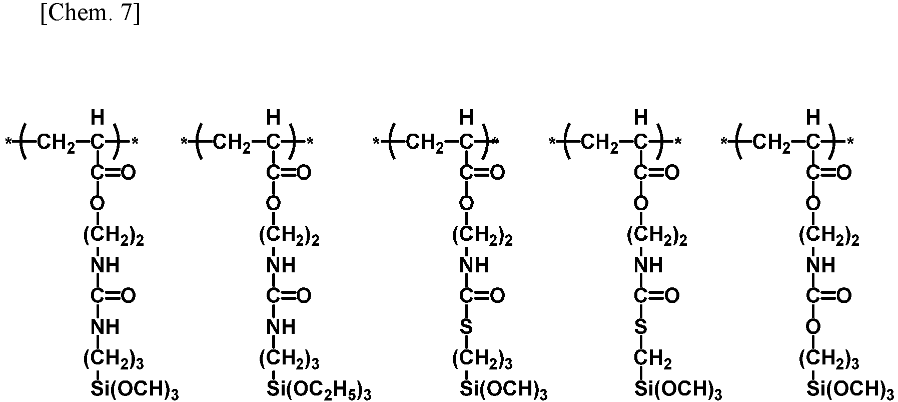

### (wherein an asterisk * has the same meaning as above.)

The content of the constitutional unit (a) in the hydrophilic copolymer according to the present invention is preferably 50 wt% to 99 wt%, is more preferably 70 wt% to 98 wt%, and is even more preferably 90 wt% to 97 wt%. When the content of the constitutional unit (a) is 50 wt% or more, the copolymer has better hydrophilicity and, consequently, a coating film formed using the copolymer has higher hydrophilicity. When the content of the constitutional unit (a) is 98 wt% or less, the copolymer does not have excessively high hydrophilicity and, consequently, a coating film formed using the copolymer has higher water resistance.

The content of the constitutional unit (b) is preferably 1 wt% to 20 wt%, is more preferably 5 wt% to 30 wt%, and is even more preferably 5 wt% to 15 wt%.

The total content of the constitutional units (a) and (b) in the hydrophilic copolymer according to the present invention is preferably 51 wt% to 100 wt%, is more preferably 80 wt% to 100 wt%, and is even more preferably 90 wt% to 100 wt%.

The hydrophilic copolymer according to the present invention may further include a constitutional unit (c) represented by formula (4) below, in addition to the constitutional units (a) and (b). 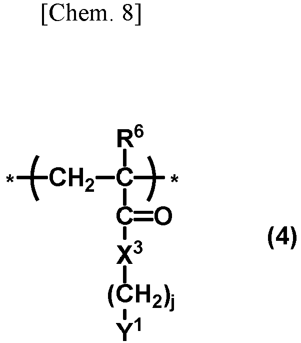 (wherein an asterisk * has the same meaning as above.)

In formula (4), R⁶ represents a hydrogen atom or a methyl group and is preferably a methyl group.

X³ represents -NH- or -O- and is preferably -O-.

Y¹ represents a group selected from the group consisting of a hydrogen atom, a hydroxyl group, a carboxyl group, an amino group, an isocyanate group, an epoxy group, an alkoxy group (-OR) and a hydrolyzable silyl group.

Examples of the alkoxy group (-OR) represented by Y¹ include those in which R is a substituted or unsubstituted alkyl group of 1 to 6 carbon atoms. Specific examples thereof include methoxy, ethoxy, n-propoxy, i-propoxy, n-butoxy, sec-butoxy, t-butoxy, n-pentyloxy, n-hexyloxy, cyclopentyloxy and cyclohexyloxy groups. Moreover, some or all of the hydrogen atoms bonded to the carbon atoms constituting the alkyl group represented by R may be replaced with a halogen atom, such as a chlorine, fluorine or bromine atom, or another substituent, such as a cyano group.

Specific examples of the hydrolyzable silyl group represented by Y¹ include alkoxysilyl groups, such as trimethoxysilyl, triethoxysilyl, dimethoxysilyl, diethoxymethylsilyl, monomethoxydimethylsilyl and monoethoxydimethylsilyl groups; carboxylatesilyl groups, such as an acetoxysilyl group; halosilyl groups, such as trichlorosilyl, dichlorosilyl and monochlorosilyl groups; aminosilyl groups; oximesilyl groups; and hydrosilyl groups.

Of these, as Y¹, a hydrogen atom and a hydroxyl group are preferable.

j represents an integer of 0 to 10, is preferably an integer of 0 to 6, is more preferably an integer of 1 to 4, and is further preferably an integer of 2 to 4. Note that, when j is 0, Y¹ is a hydrogen atom.

In the case where the hydrophilic copolymer according to the present invention includes the constitutional unit (c), for example, using the copolymer according to the present invention in combination with a curing agent having a functional group capable of crosslinking with Y¹ included in the constitutional unit (c) allows a crosslinked structure to be formed with the curing agent and the copolymer. Alternatively, using the copolymer according to the present invention in combination with a curing catalyst, such as an acid catalyst, allows the copolymer to undergo a crosslinking reaction on its own (self-crosslinking). Therefore, a coating film formed using a composition that includes the hydrophilic copolymer according to the present invention and a curing agent has a crosslinked structure and exhibits excellent water resistance.

In this regard, in formula (4) above, Y¹ is more preferably a hydroxyl group. When the copolymer according to the present invention includes a constitutional unit (c) in which Y¹ is a hydroxyl group, for example, using the copolymer according to the present invention in combination with a curing agent having an isocyanate group enables a crosslinked structure to be formed even at low temperatures (e.g., 110°C or less). This allows a coating film to be formed using a composition including the hydrophilic copolymer according to the present invention even on a base material having low heat resistance.

Specific examples of the constitutional unit (c) represented by formula (4) above include, but are not limited to, the constitutional unis represented by the formulae below.

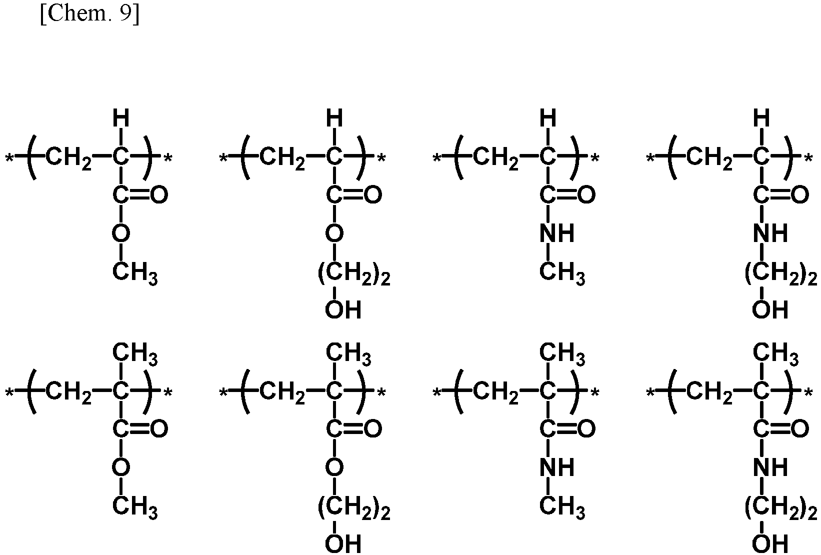

### (wherein an asterisk * has the same meaning as above.)

In the case where the hydrophilic copolymer according to the present invention includes the constitutional unit (c), the content of the constitutional unit (c) is preferably, but not limited to, 1 wt% to 50 wt%, is more preferably 3 wt% to 20 wt%, and is even more preferably 5 wt% to 10 wt%.

The order in which the above constitutional units included in the hydrophilic copolymer according to the present invention are arranged is not limited. The copolymer according to the present invention may be any of an alternating copolymer, a random copolymer and a block copolymer.

The weight-average molecular weight of the hydrophilic copolymer according to the present invention is preferably, but not limited to, 1,000 to 1,000,000, is more preferably 5,000 to 700,000, is even more preferably 300,000 to 600,000, and is further preferably 400,000 to 500,000 in order to enhance affinity for organic solvents and increase the hardness of the coating film. In the present invention, weight-average molecular weight is a value measured by gel permeation chromatography (GPC) (reference material: polystyrene, eluent: tetrahydrofuran).

The viscosity of the hydrophilic copolymer according to the present invention is not limited and is preferably 0.01 to 0.5 Pa·s (temperature: 25°C) in consideration of compatibility with organic solvents and workability. In the present invention, viscosity is a value measured with a B-type viscometer.

The glass transition temperature of the hydrophilic copolymer according to the present invention is preferably -10°C to 50°C. In the present invention, glass transition temperature is a value measured in accordance with JIS K 7121.

The hydrophilic copolymer according to the present invention can be produced by any of the methods known in the related art. For example, the hydrophilic copolymer according to the present invention may be produced by polymerizing a polymerizable monomer including an isocyanate group which is represented by formula (5) below in an inert gas atmosphere, such as a nitrogen atmosphere, in the presence of a polymerization initiator and causing the resulting polymer to react with an amino alcohol represented by formula (6) below and an organosilicon compound represented by formula (7) below in an air atmosphere or an inert gas atmosphere, such as a nitrogen atmosphere, as illustrated in the following scheme.

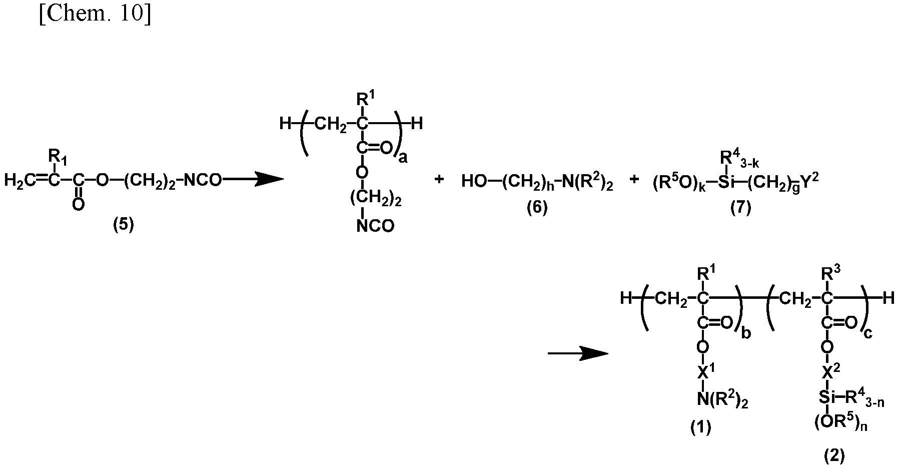

In the above formulae, R¹ to R⁵, X¹, X², and n represent the same things as described above; h represents an integer of 1 to 10, g represents an integer of 1 to 3, Y² represents a functional group selected from the group consisting of -NH(R'), -SH and -OH; R' represents a hydrogen atom or an alkyl group of 1 to 6 carbon atoms; and a, b and c are values set such that the contents of the above constitutional units fall within the respective ranges described above.

Examples of the alkyl group of 1 to 6 carbon atoms are the same as those described above.

The polymerizable monomer including an isocyanate group which is represented by formula (5) above may be a product commercially available on the market. Examples thereof include Karenz (registered trademark) AOI produced by Showa Denko K.K.

The polymerization initiator is preferably a thermal polymerization initiator. The amount of the polymerization initiator used is preferably 0.5 wt% to 30 wt%, is more preferably 1 wt% to 20 wt%, and is even more preferably 2 wt% to 10 wt% of the total weight of the monomers that are to be copolymerized with one another. The polymerization initiator may be used in one batch or multiple batches.

Specific examples of the compound represented by formula (7) above are described below. Note that the compound represented by formula (7) is not limited to these examples. Of these, the compound represented by formula (8) is preferable. 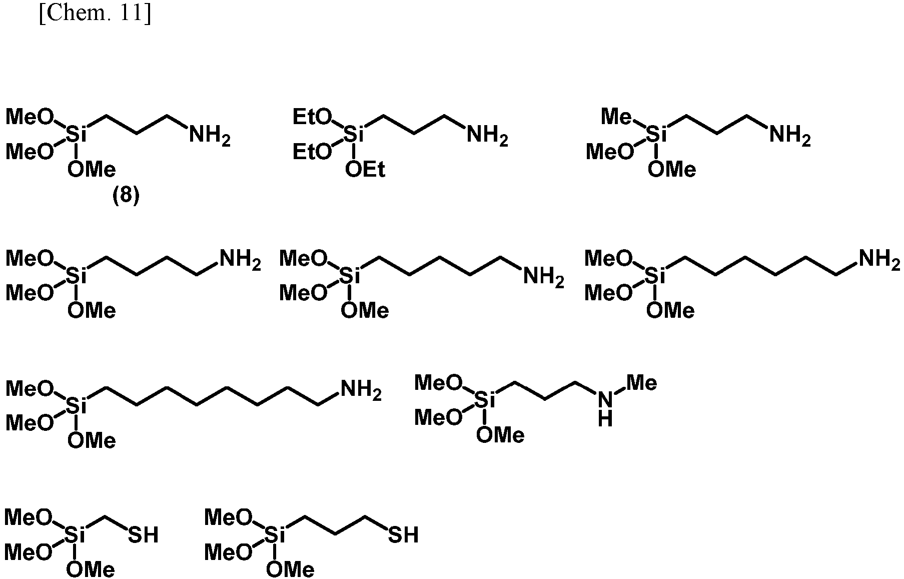 (wherein Me represents a methyl group and Et represents an ethyl group.)

The above reaction can be performed without using any solvent and may be performed in an organic solvent that does not inhibit the reaction, such as methyl ethyl ketone or 1,2-dimethoxyethane, as needed.

The reaction temperature is preferably 0°C to the boiling point of the solvent and is more preferably 20°C to 80°C. The reaction time is preferably 1 to 24 hours and is more preferably 5 to 10 hours.

As needed, an additive may be added to the hydrophilic copolymer produced by the above method after the solid component concentration has been adjusted, after the solvent has been replaced with another, or after a filtration treatment has been performed. Alternatively, the hydrophilic copolymer generated by polymerization may be purified using, for example, precipitation or reprecipitation with hexane or the like and subsequently may be dissolved in a solvent appropriate to the intended application together with an additive.

### [2] Hydrophilic Composition

A hydrophilic composition according to the present invention (hereinafter, also referred to simply as "composition") includes one or more types of the hydrophilic copolymers. The content of the hydrophilic copolymers in the composition according to the present invention is preferably, but not limited to, 1 wt% to 50 wt% and is more preferably 5 wt% to 25 wt% of the total amount of the composition in consideration of hydrophilicity.

The composition according to the present invention may optionally include another additive or the like that does not impair the object of the present invention.

Examples of the other additive include an acid, such as hydrochloric acid, sulfuric acid, nitric acid, acetic acid, formic acid, oxalic acid or maleic acid; an alkali, such as ammonia, methylamine or ethylamine; an organic metal salt; a Lewis acid; an alkyl tin ester compound; a leveling agent; and a surfactant. Of these, addition of an organic metal salt enables curing to be performed at 25°C and 50% RH and makes it possible to produce a hydrophilic film having high durability.

The leveling agent and the surfactant are added to the above composition in order to enhance the uniformity of the coating film. The leveling agents and surfactants known in the related art may be used. It is particularly preferable to use commercial leveling agents and surfactants, which are easily available.

Examples of the organic metal salts include sodium acetate, potassium acetate, sodium propionate, potassium propionate, sodium formate, potassium formate and tin octylate.

Specific examples of the Lewis acids include tetraisopropyl titanate, tetrabutyl titanate, aluminum tri-isobutoxide, aluminum tri-isopropoxide, aluminum acetylacetonate, tin chloride (SnCl₄), titanium chloride (TiCl₄) and zinc chloride (ZnCl₄).

Specific examples of the alkyl tin ester compounds include alkyl tin ester compounds, such as dibutyltin diacetate, dibutyltin dilaurate, dioctyltin dilaurate, dibutyltin dioctoate, dioctyltin dioctoate and dioctyltin diversatate.

The above compounds may be used alone or in combination of two or more.

In the case where the composition according to the present invention includes an organic metal salt, the content of the organic metal salt is preferably 0.05 to 50 parts by weight and is more preferably 0.1 to 5 parts by weight relative to 100 parts by weight of the hydrophilic copolymer.

The composition according to the present invention may include a solvent as needed. The solvent may be any solvent in which the hydrophilic copolymer and the other additive can be dissolved or dispersed, which does not react with any of the components described above, and which can be easily removed in the drying step, which is described below.

Specific examples of the solvent include methanol, ethanol, isopropanol, tetrahydrofuran, cyclohexanone, methyl ethyl ketone, ethylene glycol monomethyl ether, ethylene glycol monoethyl ether, 2-methoxyethyl acetate, diethylene glycol dimethyl ether, 1-methoxy-2-propanol, 1-methoxy-2-propyl acetate, N,N-dimethylformamide, N,N-dimethylacetamide, toluene, ethyl acetate, ethyl lactate, methyl lactate, dimethyl sulfoxide and water.

The above solvents may be used alone or in combination of two or more.

The concentration of solid components in the composition according to the present invention is preferably 5 wt% to 80 wt% and is more preferably 10 wt% to 30 wt% in consideration of coatability and workability.

The viscosity of the composition according to the present invention is preferably 0.01 to 0.05 Pa·s (temperature: 25°C) in consideration of coatability and workability.

The composition according to the present invention may be a one-part liquid system, or may be a system that uses two or more liquids which are mixed prior to use.

The composition according to the present invention can be applied to various types of base materials to impart hydrophilicity to the base materials.

Specific examples of the materials constituting the base materials include glass; synthetic resins {e.g., a polymethyl methacrylate resin, a polyethylene terephthalate resin, a polybutylene terephthalate resin, a polyethylene naphthalate resin, an ABS resin, a polycarbonate resin, a polystyrene resin, an epoxy resin, an unsaturated polyester resin, a melamine resin, a diallyl phthalate resin, a polyimide resin, a urethane resin, a nylon resin, a polyethylene resin, a polypropylene resin, a polyvinyl chloride resin, a fluororesin (e.g., a polytetrafluoroethylene resin, a polychlorotrifluoroethylene resin, a polyvinylidene fluoride resin, a perfluoroalkoxy fluororesin, a tetrafluoroethylene-hexafluoropropylene copolymer resin, an ethylene tetrafluoroethylene copolymer resin or an ethylene-chlorotrifluoroethylene copolymer resin), polybutadiene, polyisopropylene, SBR, a nitrile rubber, EPM, EPDM, an epichlorohydrin rubber, a Neoprene rubber, a polysulfide and a butyl rubber}; metals (e.g., iron, aluminum, stainless steel, titanium, copper, brass and an alloy thereof); natural fibers, such as cellulose, a cellulose derivative, a cellulose analog (e.g., chitin, chitosan or porphyran), cotton, silk and wool, regenerated fibers, such as rayon, semisynthetic fibers, such as acetate, and synthetic fibers, such as vinylon, polyester, nylon, polyethylene, polypropylene, polyurethane and polyaramid fibers; and composite fibers of the above fibers (e.g., polyester/cotton). Examples of the form of these materials include a substrate, a sheet, a film, fibers and various articles including these materials.

The composition according to the present invention is applied onto the surface of a substrate or the like to form a coating film, which can be used as a hydrophilic coat film.

Examples of the coating method include bar coating, dip coating, spin coating, spray coating, float coating, brush coating, gravure coating, roller transfer, blade coating, air knife coating, slit coating, screen coating, inkjet method and flexography. Of these, bar coating is preferable.

After the composition has been applied to the base material, the resulting film is left to stand at room temperature in an air atmosphere to form a cured coating film. The amount of time during which the film is left to stand is preferably 12 to 240 hours and is more preferably 24 to 120 hours.

Optionally, heating may be performed to reduce the amount of time required by the above curing step.

In such a case, the above heating temperature is preferably 40°C to 250°C and is more preferably 80°C to 120°C.

The above heating time is preferably 10 seconds to 12 hours and is more preferably 30 seconds to 3 hours.

The above heating atmosphere may be either an air atmosphere or an inert gas (e.g., nitrogen or argon) atmosphere.

The thickness of the coating film (dry film thickness) is preferably, but not limited to, 0.1 to 50 µm and is more preferably 1 to 20 µm.

### EXAMPLES

Further details of the present invention are described with reference to Examples and Comparative Examples below, although the present invention is not limited by Examples below.

### (1) Production of Hydrophilic Copolymers

### [Example 1-1]

To a reactor, 102.16 g of 1,2-dimethoxyethane, 42.34 g of Karenz (registered trademark) AOI (produced by Showa Denko K.K.) represented by formula (9) below, and 1.44 g of an oil-soluble azo polymerization initiator V-59 (produced by FUJIFILM Wako Pure Chemical Corporation) represented by formula (10) below were added. Then, a reaction was conducted at 80°C for 4 hours.

Subsequently, the heating of the reactor was stopped. After the temperature of the solution contained in the reactor reached 25°C or less, 24.74 g of 2-(dimethylamino)ethanol, 4.24 g of 3-aminopropyltrimethoxysilane, and 0.15 g of NEOSTANN U-830 (produced by Nitto Kasei Co., Ltd.), which is a dioctyltin catalyst, were added to the reactor. Then, a reaction was conducted at 25°C for 4 hours.

Following the reaction, 170 g of a 1,2-dimethoxyethane solution (solid component concentration: 41 wt%) of a hydrophilic copolymer P1 (content of constitutional unit (a): 92.5 wt%, content of constitutional unit (b): 7.5 wt%; weight-average molecular weight: 410,000) was obtained by filtration.

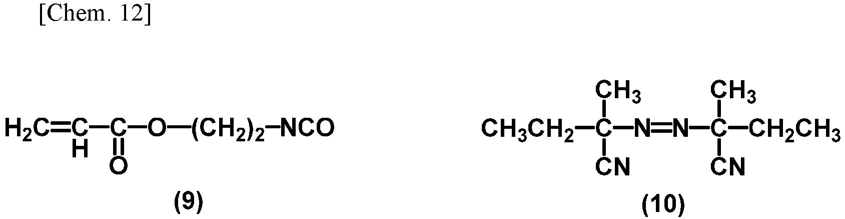

### [Example 1-2]

To a reactor, 102.16 g of 1,2-dimethoxyethane, 42.34 g of Karenz (registered trademark) AOI (produced by Showa Denko K.K.) represented by formula (9) above, and 1.44 g of an oil-soluble azo polymerization initiator V-59 (produced by FUJIFILM Wako Pure Chemical Corporation) represented by formula (10) above were added. Then, a reaction was conducted at 80°C for 4 hours.

Subsequently, the heating of the reactor was stopped. After the temperature of the solution contained in the reactor reached 25°C or less, 24.07 g of 2-(dimethylamino)ethanol, 5.65 g of 3-aminopropyltrimethoxysilane, and 0.15 g of NEOSTANN U-830 (produced by Nitto Kasei Co., Ltd.), which is a dioctyltin catalyst, were added to the reactor. Then, a reaction was conducted at 25°C for 4 hours.

Following the reaction, 170 g of a 1,2-dimethoxyethane solution (solid component concentration: 41 wt%) of a hydrophilic copolymer P2 (content of constitutional unit (a): 90 wt%, content of constitutional unit (b): 10 wt%; weight-average molecular weight: 410,000) was obtained by filtration.

### [Example 1-3]

To a reactor, 109.45 g of methyl ethyl ketone, 35.28 g of Karenz (registered trademark) AOI (produced by Showa Denko K.K.) represented by formula (9) above, and 1.20 g of an oil-soluble azo polymerization initiator V-59 (produced by FUJIFILM Wako Pure Chemical Corporation) represented by formula (10) above were added. Then, a reaction was conducted at 80°C for 4 hours.

Subsequently, the heating of the reactor was stopped. After the temperature of the solution contained in the reactor reached 25°C or less, 20.61 g of 2-(dimethylamino)ethanol, 3.87 g of 3-mercaptopropyltrimethoxysilane, and 0.15 g of NEOSTANN U-830 (produced by Nitto Kasei Co., Ltd.), which is a dioctyltin catalyst, were added to the reactor.
Then, a reaction was conducted at 25°C for 4 hours.

Following the reaction, 160 g of a methyl ethyl ketone solution (solid component concentration: 36 wt%) of a hydrophilic copolymer P3 (content of constitutional unit (a): 92.5 wt%, content of constitutional unit (b): 7.5 wt%; weight-average molecular weight: 420,000) was obtained by filtration.

### [Example 1-4]

To a reactor, 109.45 g of methyl ethyl ketone, 35.28 g of Karenz (registered trademark) AOI (produced by Showa Denko K.K.) represented by formula (9) above, and 1.20 g of an oil-soluble azo polymerization initiator V-59 (produced by FUJIFILM Wako Pure Chemical Corporation) represented by formula (10) above were added. Then, a reaction was conducted at 80°C for 4 hours.

Subsequently, the heating of the reactor was stopped. After the temperature of the solution contained in the reactor reached 25°C or less, 20.06 g of 2-(dimethylamino)ethanol, 5.15 g of 3-mercaptopropyltrimethoxysilane, and 0.15 g of NEOSTANN U-830 (produced by Nitto Kasei Co., Ltd.), which is a dioctyltin catalyst, were added to the reactor.
Then, a reaction was conducted at 25°C for 4 hours.

Following the reaction, 160 g of a methyl ethyl ketone solution (solid component concentration: 36 wt%) of a hydrophilic copolymer P4 (content of constitutional unit (a): 90 wt%, content of constitutional unit (b): 10 wt%; weight-average molecular weight: 420,000) was obtained by filtration.

### [Example 1-5]

To a reactor, 109.45 g of methyl ethyl ketone, 35.28 g of Karenz (registered trademark) AOI (produced by Showa Denko K.K.) represented by formula (9) above, and 1.20 g of an oil-soluble azo polymerization initiator V-59 (produced by FUJIFILM Wako Pure Chemical Corporation) represented by formula (10) above were added. Then, a reaction was conducted at 80°C for 4 hours.

Subsequently, the heating of the reactor was stopped. After the temperature of the solution contained in the reactor reached 25°C or less, 20.06 g of 2-(dimethylamino)ethanol, 4.69 g of 3-aminopropyldimethoxymethylsilane, and 0.15 g of NEOSTANN U-830 (produced by Nitto Kasei Co., Ltd.), which is a dioctyltin catalyst, were added to the reactor. Then, a reaction was conducted at 25°C for 4 hours.

Following the reaction, 160 g of a methyl ethyl ketone solution (solid component concentration: 36 wt%) of a hydrophilic copolymer P5 (content of constitutional unit (a): 90 wt%, content of constitutional unit (b): 10 wt%; weight-average molecular weight: 420,000) was obtained by filtration.

### [Comparative Example 1-1]

To a reactor, 109.45 g of methyl ethyl ketone, 35.28 g of Karenz (registered trademark) AOI (produced by Showa Denko K.K.) represented by formula (9) above, and 1.20 g of an oil-soluble azo polymerization initiator V-59 (produced by FUJIFILM Wako Pure Chemical Corporation) represented by formula (10) above were added. Then, a reaction was conducted at 80°C for 4 hours.

Subsequently, the heating of the reactor was stopped. After the temperature of the solution contained in the reactor reached 25°C or less, 22.29 g of 2-(dimethylamino)ethanol and 0.15 g of NEOSTANN U-830 (produced by Nitto Kasei Co., Ltd.), which is a dioctyltin catalyst, were added to the reactor. Then, a reaction was conducted at 25°C for 4 hours.

Following the reaction, 160 g of a methyl ethyl ketone solution (solid component concentration: 36 wt%) of a hydrophilic polymer P6 (content of constitutional unit (a): 100 wt%; weight-average molecular weight: 420,000) was obtained by filtration.

### [Comparative Example 1-2]

To a reactor, 44.02 g of ethyl acetate, 64.05 g of dimethylaminopropylacrylamide represented by formula (11) below, and 1.97 g of an oil-soluble azo polymerization initiator V-59 (produced by FUJIFII,M Wako Pure Chemical Corporation) represented by formula (10) above were added. Then, a reaction was conducted at 80°C for 4 hours.

Following the reaction, 100 g of an ethyl acetate solution (solid component concentration: 48 wt%) of a hydrophilic polymer P7 (weight-average molecular weight: 350,000) was obtained by filtration.

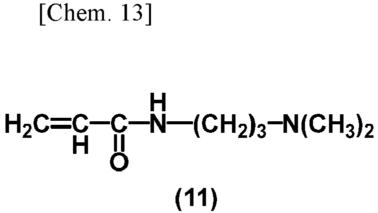

### [Comparative Example 1-3]

To a reactor, 5.92 g of methanol, 1.41 g of dimethylaminopropylacrylamide represented by formula (11) above, 0.23 g of 3-acryloxypropyltrimethoxysilane represented by formula (12) below, and 0.77 g of an oil-soluble azo polymerization initiator V-59 (produced by FUJIFILM Wako Pure Chemical Corporation) represented by formula (10) above were added. Then, a reaction was conducted at 65°C for 4 hours.

Following the reaction, 7 g of a methanol solution (solid component concentration: 25 wt%) of a hydrophilic copolymer P8 (weight-average molecular weight: 400,000) was obtained by filtration.

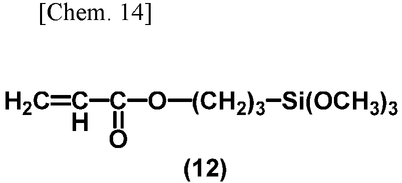

### (2) Production of Coating Compositions (Hydrophilic Compositions)

### [Example 2-1]

To a reactor, 1.21 g of the 1,2-dimethoxyethane solution of the hydrophilic copolymer P1 obtained in Example 1-1, 0.79 g of isopropanol, and 0.02 g of a titanium-based catalyst D-25 (produced by Shin-Etsu Chemical Co., Ltd.) were added. Thus, a clear yellow liquid (C1) was obtained.

### [Example 2-2]

To a reactor, 1.21 g of the 1,2-dimethoxyethane solution of the hydrophilic copolymer P2 obtained in Example 1-2, 0.79 g of isopropanol, and 0.02 g of a titanium-based catalyst D-25 (produced by Shin-Etsu Chemical Co., Ltd.) were added. Thus, a clear yellow liquid (C2) was obtained.

### [Example 2-3]

To a reactor, 1.39 g of the methyl ethyl ketone solution of the hydrophilic copolymer P3 obtained in Example 1-3, 0.61 g of isopropanol, and 0.02 g of a titanium-based catalyst D-25 (produced by Shin-Etsu Chemical Co., Ltd.) were added. Thus, a clear yellow liquid (C3) was obtained.

### [Example 2-4]

To a reactor, 1.39 g of the methyl ethyl ketone solution of the hydrophilic copolymer P4 obtained in Example 1-4, 0.61 g of isopropanol, and 0.02 g of a titanium-based catalyst D-25 (produced by Shin-Etsu Chemical Co., Ltd.) were added. Thus, a clear yellow liquid (C4) was obtained.

### [Example 2-5]

To a reactor, 1.39 g of the methyl ethyl ketone solution of the hydrophilic copolymer P5 obtained in Example 1-5, 0.61 g of isopropanol, and 0.02 g of a titanium-based catalyst D-25 (produced by Shin-Etsu Chemical Co., Ltd.) were added. Thus, a clear yellow liquid (C5) was obtained.

### [Comparative Example 2-1]

To a reactor, 1.39 g of the methyl ethyl ketone solution of the hydrophilic polymer P6 obtained in Comparative Example 1-1 and 0.61 g of isopropanol were added. Thus, a clear yellow liquid (C6) was obtained.

### [Comparative Example 2-2]

To a reactor, 1.04 g of the ethyl acetate solution of the hydrophilic polymer P7 obtained in Comparative Example 1-2 and 0.96 g of isopropanol were added. Thus, a clear yellow liquid (C7) was obtained.

### [Comparative Example 2-3]

To a reactor, 2.00 g of the methanol solution of the hydrophilic copolymer P8 obtained in Comparative Example 1-3 and 0.02 g of a titanium-based catalyst D-25 (produced by Shin-Etsu Chemical Co., Ltd.) were added. Thus, a clear yellow liquid (C8) was obtained.

### [Comparative Example 2-4]

To a reactor, 10 g of ACRIT 6BF-100 (solid component concentration: 40 wt%, produced by Taisei Fine Chemical Co., Ltd.), which is a hydroxyl group-containing acrylic resin having a weight-average molecular weight of 75,000, a hydroxyl value of 20 mgKOH/g, and an estimated glass transition temperature of 85°C, 0.65 g of DURANATE TPA-100 (NCO content: 23 wt%, produced by Asahi Kasei Corporation), 1.0 g of a methyl ethyl ketone solution (solid component concentration: 40 wt%) of ACRIT 1WX (produced by Taisei Fine Chemical Co., Ltd.), which is a copolymer including the constitutional units represented by formulae (13), (14), (15), (16), and (17) below, and 13.6 g of methyl ethyl ketone were added, and the above materials were mixed together. Thus, a clear yellow liquid (C9) was obtained.

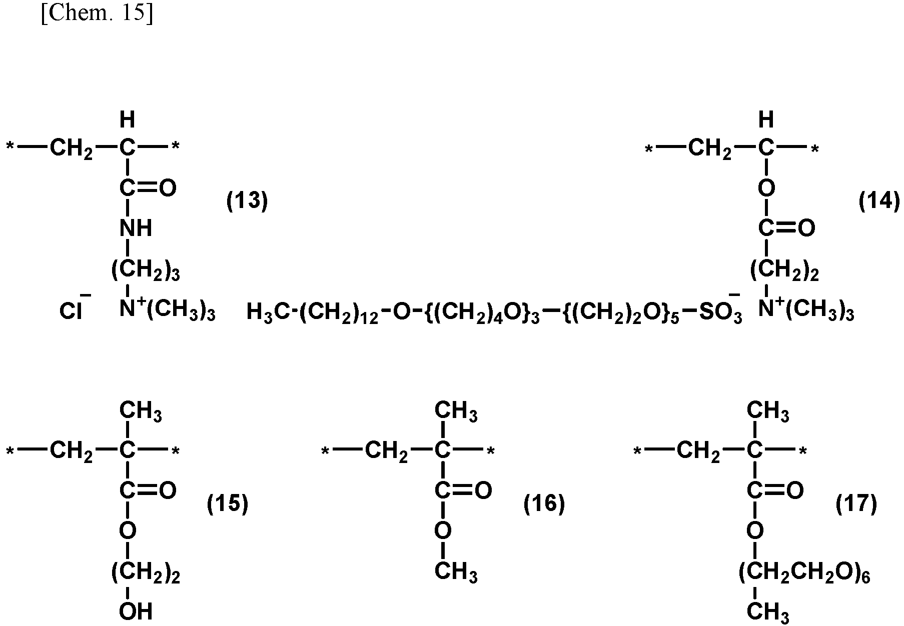

### (wherein an asterisk * has the same meaning as above.)

### (3) Preparation and Evaluation of Coating Films

### [Examples 3-1 to 3-5 and Comparative Examples 3-1 to 3-4]

Each of the coating compositions C1 to C9, which were obtained in Examples 2-1 to 2-5 and Comparative Examples 2-1 to 2-4, was applied to a polycarbonate board with a bar coater (No. 20). The resulting coating film was immediately dried at 120°C for 1 hour to form a hydrophilic film.

### [Examples 4-1 to 4-5 and Comparative Examples 4-1 to 4-4]

Each of the coating compositions C1 to C9, which were obtained in Examples 2-1 to 2-5 and Comparative Examples 2-1 to 2-4, was applied to a polycarbonate board with a bar coater (No. 20). The resulting coating film was left to stand at 25°C and 50% RH for 24 hours to form a hydrophilic film.

The hydrophilic films prepared in Examples and Comparative Examples were each subjected to the following tests. Tables 1 and 2 list the results of the tests.

### [Antifogging]

In the evaluation of antifogging property, a breath was blown to each of the above films. An evaluation of "×" was given when the surface of the film was fogged, while an evaluation of "O" was given when the surface of the film was not fogged. Moreover, each of the films was placed above a hot-water bath at 40°C at a position 3 cm above the water surface for 60 seconds. An evaluation of "⊚" was given when the surface of the film was not fogged.

### [Trace of Drips]

After each of the coating films was subjected to the evaluation of antifogging property, in which the coating film was left to stand above the hot-water bath at 40°C for 60 seconds in order to evaluate antifogging property, the coating film was air-dried at 25°C for 10 minutes. Subsequently, a 1,000-lm flashlight was shone on the surface of the film in order to visually confirm whether the trace of drips was present on the surface of the coating film. An evaluation of "+" was given when the trace of drips was confirmed, while an evaluation of "-" was given when the trace of drips was not confirmed.

### [Warm-Water Resistance]

Each of the films was immersed in warm water at 40°C for 24 hours. After water present on the surface was absorbed with a paper wiper, the film was air-dried at 25°C for 10 minutes and subsequently evaluated in terms of antifogging property in the same manner as described above.

Furthermore, each of the films was immersed in warm water at 40°C for another 216 hours. After water present on the surface was absorbed with a paper wiper, the film was air-dried at 25°C for 10 minutes and subsequently evaluated in terms of antifogging property in the same manner as described above.

### [Moisture Resistance]

Each of the films was left to stand in a thermohygrostat (KCL-2000W, produced by Tokyo Rikakikai Co., Ltd.) set at 50°C and 98% RH for 24 hours, subsequently air-dried at 25°C for 10 minutes, and evaluated in terms of antifogging property in the same manner as described above.

**[Table 1]**

| | Coating composition | Initial antifogging | Traces of drips | Warm-water resistance | | Moisture resistance |
|---|---|---|---|---|---|---|
| | | | | After 24-hour immersion | After 240-hour immersion | 50°C 98% RH, 24 hours |
| Example 3-1 | C1 | ⊚ | - | ⊚ | ⊚ | ⊚ |
| Example 3-2 | C2 | ⊚ | - | ⊚ | ⊚ | ⊚ |
| Example 3-3 | C3 | ⊚ | - | ⊚ | ○ | ⊚ |
| Example 3-4 | C4 | ⊚ | - | ⊚ | ○ | ⊚ |
| Example 3-5 | C5 | ⊚ | - | ⊚ | ○ | ⊚ |
| Comparative Example 3-1 | C6 | ⊚ | + | × | × | ○ |
| Comparative Example 3-2 | C7 | ⊚ | + | × | × | ○ |
| Comparative Example 3-3 | C8 | ⊚ | + | ○ | × | ○ |
| Comparative Example 3-4 | C9 | ⊚ | + | × | × | ○ |

**[Table 2]**

| | Coating composition | Initial antifogging | Traces of drips | Warm-water resistance | | Moisture resistance |
|---|---|---|---|---|---|---|
| | | | | After 24-hour immersion | After 240-hour immersion | 50°C 98% RH, 24 hours |
| Example 4-1 | C1 | ⊚ | - | ⊚ | ⊚ | ⊚ |
| Example 4-2 | C2 | ⊚ | - | ⊚ | ⊚ | ⊚ |
| Example 4-3 | C3 | ⊚ | - | ⊚ | ○ | ⊚ |
| Example 4-4 | C4 | ⊚ | - | ⊚ | ○ | ⊚ |
| Example 4-5 | C5 | ⊚ | - | ⊚ | ○ | ⊚ |
| Comparative Example 4-1 | C6 | ⊚ | + | × | × | ○ |
| Comparative Example 4-2 | C7 | ⊚ | + | × | × | ○ |
| Comparative Example 4-3 | C8 | ⊚ | + | ○ | × | ○ |
| Comparative Example 4-4 | C9 | ⊚ | + | × | × | ○ |

As described in Tables 1 and 2, it is confirmed that the films prepared in Examples 3-1 to 3-5 and Examples 4-1 to 4-5 maintained excellent antifogging property even after the warm-water resistance test (24-hour immersion and 240-hour immersion) or the moisture resistance test (50°C, 98% RH, 24 hours). It is confirmed that the film prepared in Example 3-1 was particularly excellent in terms of durability.

In contrast, the films prepared in Comparative Examples 3-1, 3-2, 3-4, 4-1, 4-2 and 4-4 lost their antifogging property following the 24-hour immersion in warm water, and the films prepared in Comparative Examples 3-3 and 4-3 lost their antifogging property following the 240-hour immersion in warm water. This confirms that these films had poor water resistance.

## Claims

1. A hydrophilic copolymer comprising a constitutional unit (a) represented by formula (1) below and a constitutional unit (b) represented by formula (2) below, 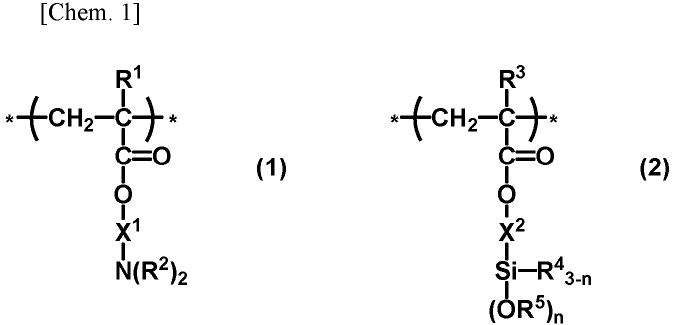 wherein, in formula (1), R¹ represents a hydrogen atom or a methyl group, each R² independently represents a hydrogen atom or an alkyl group of 1 to 6 carbon atoms, and X¹ represents a divalent linking group;
in formula (2), R³ represents a hydrogen atom or a methyl group, R⁴ and R⁵ each independently represent an alkyl group of 1 to 10 carbon atoms or an aryl group of 6 to 10 carbon atoms, X² represents a divalent linking group, and n represents an integer of 1 to 3; and an asterisk * denotes a bond to a neighboring constitutional unit.

2. The hydrophilic copolymer according to claim 1, wherein X¹ and X² each independently represent a divalent linking group having one or more selected from the group consisting of a urethane bond, a urea bond, a thiourethane bond and a thiourea bond.

3. A hydrophilic composition comprising the hydrophilic copolymer according to claim 1 or 2.

4. A film of the hydrophilic composition according to claim 3 in a cured state.
